# FASCICULE DE BREVET EUROPEEN

(11) **EP 0 952 361 B1**
(45) Date de publication et mention de la délivrance du brevet: **21.07.2004**
(21) Numéro de dépôt: 98201286.6
(22) Date de dépôt: 21.04.1998
(51) Int. Cl.: F16C 13/00, F16C 17/18

(54) **Galet de liaison entre un axe mobile et une surface d'appui**
Verbindungslaufrolle zwischen einer bewegbaren Achse und einer Stützfläche
Link roller between a movable trunion and a bearing surface

(43) Date de publication de la demande: 27.10.1999
(73) Titulaire: SOCIETE TECHSPACE AERO, B-4041 Milmort, Herstal (BE)
(72) Inventeur: Delobel, Pierre, 4031 Angleur (BE)
(74) Mandataire: Berrou, Paul

(56) Documents cités:
- FR-A- 2 609 316
- GB-A- 2 239 908
- GB-A- 2 275 744
- US-A- 3 086 826
- US-A- 4 685 184
- US-A- 5 219 232

## Description

L'invention concerne un galet de liaison entre un axe mobile et une surface d'appui, qui comporte une bague intérieure fixée sur l'axe, une bague extérieure en appui sur la surface et une bague intermédiaire interposée entre la bague intérieure et la bague extérieure.

De tels galets sont utilisés dans de nombreux domaines, et notamment dans des actionneurs rotatifs commandés par un piston, ce dernier comportant alors des surfaces d'appui perpendiculaires à la direction du déplacement du piston, et le galet étant disposé à l'extrémité d'une bielle.

De tels actionneurs équipent une pluralité de dispositifs et sont souvent soumis à des températures différentes en cours d'utilisation. Certains de ces dispositifs sont destinés à fonctionner à la température ambiante et à basse température, par exemple dans le cas de vannes cryotechniques. D'autres sont destinés à fonctionner à la température ambiante et à haute température.

En plus des contraintes liées aux variations de température, les galets utilisés dans ces actionneurs doivent permettre l'amortissement des chocs.

L'invention s'est donné pour but de proposer un galet de liaison entre un axe mobile et une surface d'appui qui permette une utilisation dans une gamme étendue de températures ainsi que l'amortissement de chocs.

On connait par GB-A-2 239 908 un galet de liaison résistant aux chocs dans lequel les bagues intérieure et extérieure sont des bagues métalliques, tandis que la bague intermédiaire est une bague en polymère, et un jeu entre bagues permet la rotation.

Mais une détermination des dimensions est nécessaire selon les conditions habituelles de température au cours de l'utilisation du galet.

Ce choix est également une conséquence des différences des propriétés de dilatation existant entre les métaux et les polymères

Pour répondre aux conditions où le galet est destiné à fonctionner à la température ambiante et à basse température, selon l'invention, la bague intermédiaire en polymère, à la température ambiante et avant montage, a un diamètre extérieur légèrement supérieur au diamètre intérieur de la bague extérieure et a un diamètre intérieur légèrement supérieur au diamètre extérieur de la bague intérieur.

Alors, à la température ambiante, la bague intermédiaire est serrée dans la bague extérieure, et le jeu existant entre la bague intermédiaire en polymère et la bague intérieure métallique permet un mouvement relatif entre ces deux éléments. Lorsque la température décroît, la bague intermédiaire en polymère se contracte plus que les bagues métalliques, et un jeu apparaît entre la bague intermédiaire et la bague extérieure. Par contre, le jeu existant à l'origine entre la bague en polymère et la bague intérieure diminue progressivement et peut même s'annuler sans inconvénient, puisque la rotation du galet est alors assurée par le mouvement relatif entre la bague extérieure et la bague intermédiaire en polymère.

Pour assurer un bon fonctionnement du mécanisme équipé du galet selon l'invention, il est préférable de respecter les indications suivantes :
a) le polymère utilisé doit posséder des caractéristiques tribologiques et mécaniques suffisantes dans l'intervalle considéré de température d'utilisation ;
b) les dimensions des bagues doivent être adoptées aux efforts à transmettre ; en particulier, il est nécessaire de veiller à ce que la rigidité de la bague extérieure soit suffisante pour répartir l'effort sur une surface suffisante au niveau de la bague intermédiaire en polymère ;
c) la détermination précisé des diamètres et de leurs tolérances dimensionnelles doit être basée sur les caractéristiques de dilatation des matériaux utilisés ;
d) la localisation et le maintien des trois bagues du galet suivant l'axe de rotation peuvent être assurés par la bielle sur laquelle est monté le galet.

D'autres avantages de l'invention ressortiront à la lecture de la description suivante faite à titre d'exemple et en référence aux dessins annexés dans lesquels :

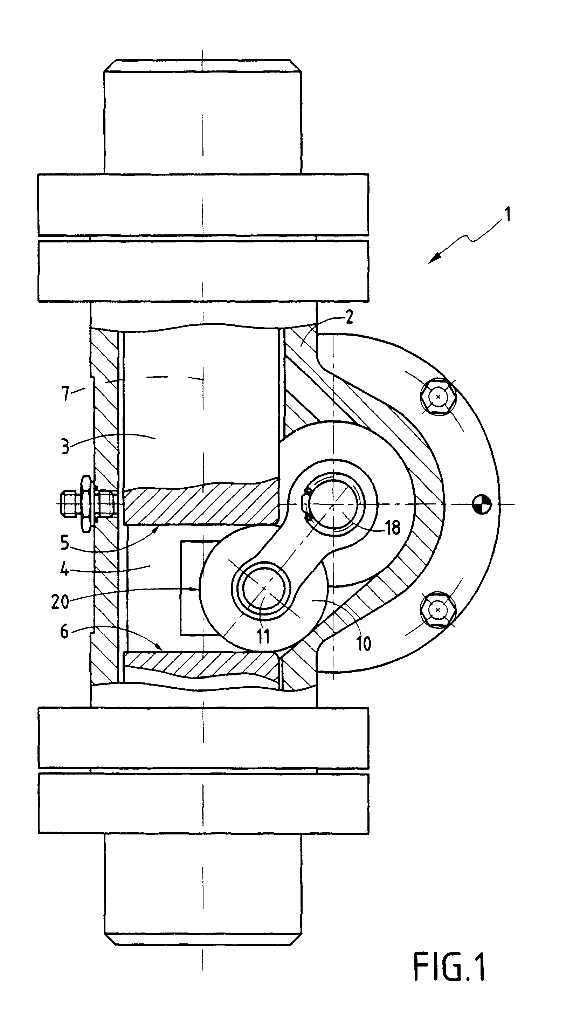

la figure 1 montre, à titre d'exemple, un actionneur comportant un piston dont la translation entraîne, par l'intermédiaire d'un galet et d'une bielle, la rotation d'un arbre ;
la figure 2 est une coupe éclatée d'un galet conforme à l'invention et adapté pour un système destiné à fonctionner à la température ambiante et à basse température ;
la figure 3 est une coupe éclatée d'un galet conforme à l'invention destiné à fonctionner à la température ambiante et à haute température ; et

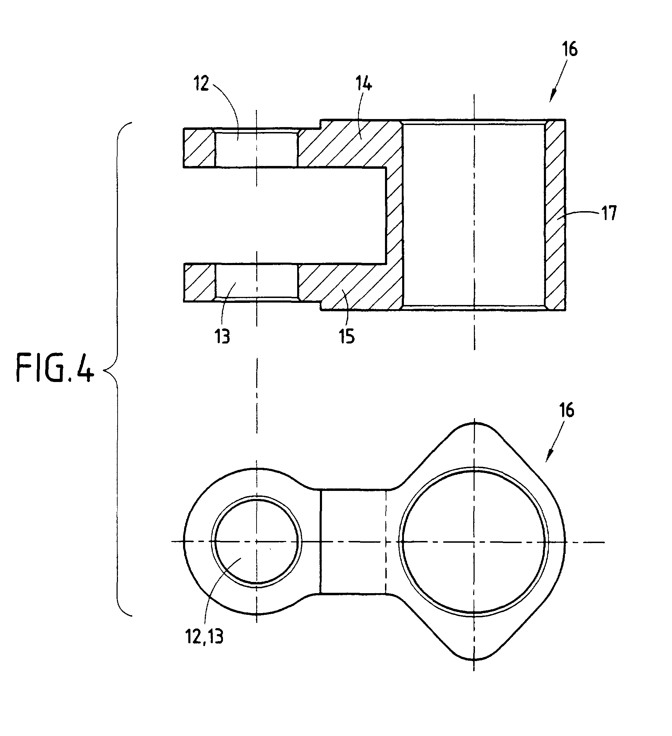

la figure 4 montre une bielle susceptible de porter un galet selon l'invention.

Le dessin montre un actionneur 1 qui comporte un corps creux 2 dans lequel est monté coulissant un piston 3 qui présente une échancrure transversale 4 délimitée par deux surfaces parallèles 5, 6 perpendiculaires à l'axe de déplacement 7 du piston 3.

Entre les surfaces 5 et 6 est disposé un galet 10 porté par un axe, ou broche 11, perpendiculaire à l'axe de déplacement 7 du piston 3. La broche 11 est montée dans des ouvertures 12, 13 prévues sur les oreilles d'extrémité 14, 15 d'une bielle 16, dont l'autre extrémité 17 est solidaire d'un arbre 18 monté pivotant sur le corps 2 et parallèle à la broche 11. Le mouvement de translation du piston 3 entraîne un mouvement de rotation de l'arbre 18, par le fait que la surface périphérique 20 du galet 10 est en appui sur l'une des surfaces parallèles 5, 6, qui servent de guidage du galet 10.

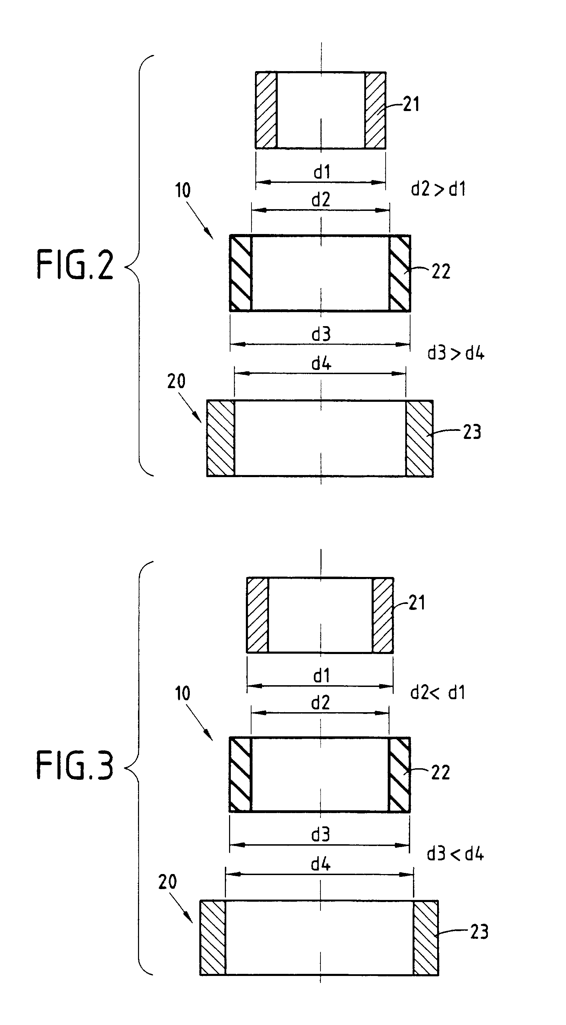

Ainsi que cela est montré sur les figures 2 et 3, le galet 10 comporte trois éléments cylindriques emboîtés l'un dans l'autre, plus précisément une bague intérieure 21 montée fixe sur la broche 11, une bague intermédiaire 22 entourant la bague intérieure 21 et une bague extérieure 23 entourant la bague intermédiaire 22 et dont la surface périphérique 20 est en appui sur l'une des surfaces parallèles 5, 6.

La bague intérieure 21 et la bague extérieure 23 sont métalliques. En revanche, la bague intermédiaire 22 est une bague en polymère.

La figure 2 montre en éclaté un assemblage de galet destiné à fonctionner à température ambiante et à basse température. Dans cet assemblage :
- la bague intermédiaire 22 a un diamètre extérieur d3 légèrement supérieur au diamètre intérieur d4 de la bague extérieure 23 ; et
- la bague intermédiaire 22 a un diamètre intérieur d2 légèrement supérieur au diamètre extérieur d1 de la bague intérieure 21.

La bague intermédiaire 22, à la température ambiante et à l'état monté du galet 10 est serrée à l'intérieur de la bague extérieure 23. Le jeu existant entre la bague intermédiaire 22 et la bague intérieure 21 permet un mouvement relatif à la température ambiante. Lorsque la température décroît, la bague intermédiaire 22 se contracte plus que les bagues métalliques 21, 23 et un jeu apparaît entre les bagues intermédiaire 22 et extérieure 23, au niveau des diamètres d3, d4. Par contre, le jeu existant à l'origine entre les bagues intermédiaire 22 et intérieure 21 diminue progressivement et peut même s'annuler sans inconvénient, puisque la rotation du galet 10 est alors assurée par le mouvement relatif entre les bagues extérieure 23 et intermédiaire 22.

Le galet 10 décrit ci-dessus permet de transmettre des efforts importants dans une gamme étendue de températures.

Le galet 10 peut être utilisé dans des assemblages soumis à des chocs importants, car la bague intermédiaire en polymère 22 assure un effet d'amortissement important. Il est à noter que cet effet d'amortissement est pratiquement absent lorsqu'on utilise par exemple un roulement à billes entièrement métallique et, dans ce cas, des dégradations surviennent rapidement lorsque l'ensemble est soumis à des chocs.

La réalisation du galet 10 selon l'invention est très économique, car peu de pièces sont nécessaires.

Le galet 10 selon l'invention est beaucoup moins sensible aux effets de pollution par des particules solides, par rapport à un galet dans lequel un roulement à billes ou à aiguilles est utilisé, du fait de l'absence d'interstices importants entre les différentes bagues.

L'invention ne se limite pas à un galet 10 utilisé dans un actionneur rotatif commandé par piston. Il peut concerner tous les domaines où l'utilisation d'un galet est nécessaire, notamment dans les domaines où les mécanismes sont soumis à des chocs importants, à basses températures. On peut également utiliser le principe de la bague intermédiaire en polymère, tel que décrit ci-dessus à d'autres mécanismes qu'un galet. On peut, en effet, envisager des utilisations de ce principe dans le domaine des paliers, pour des applications semblables à celles utilisant des paliers lubrifiés ou des roulements, et dans le domaine des liaisons entre bielle et manivelle.

## Revendications

1. Galet de liaison entre un axe mobile (11) et une surface d'appui (5, 6), comportant une bague intérieure (21) fixée sur l'axe (11), une bague extérieure (23) en appui sur ladite surface (5, 6) et une bague intermédiaire (22) interposée entre la bague intérieure (21) et la bague extérieure (23),
les bagues intérieure (21) et extérieure (23) étant métalliques, tandis que la bague intermédiaire (22) est une bague en polymère, et destiné à fonctionner à la température ambiante ou à basse température, **caractérisé par le fait que**, à la température ambiante et avant montage dudit galet (10) :
- la bague intermédiaire (22) a un diamètre extérieur (d3) légèrement supérieur au diamètre intérieur (d4) de la bague extérieure (23) ; et
- la bague intermédiaire (22) a un diamètre intérieur (d2) légèrement supérieur au diamètre extérieur (d1) de la bague intérieure (21).

## Patentansprüche

1. Verbindungsrolle zwischen einer bewegbaren Achse (11) und einer Anlagefläche (5, 6), bestehend aus einem an der Achse (11) befestigten Innenring (21), einem an der Fläche (5, 6) in Anlage befindlichen Außenring (23) und einem Zwischenring (22), der zwischen dem Innenring (21) und dem Außenring (23) angeordnet ist, wobei der Innenring (21) und der Außenring (23) aus Metall bestehen, während der Zwischenring (22) ein Ring aus Polymer ist, und die dazu bestimmt ist, bei Umgebungstemperatur oder bei niedrigen Temperaturen zu arbeiten,
**dadurch gekennzeichnet,**
**dass** bei Umgebungstemperatur und vor dem Einbauen dieser Rolle (10) :
- der Außendurchmesser (d3) des Zwischenrings (22) etwas größer ist als der Innendurchmesser (d4) des Außenrings (23); und
- der Innendurchmesser (d2) des Zwischenrings (22) etwas größer ist als der Außendurchmesser (d1) des Innenrings (21).

## Claims

1. Connecting roller between a moveable axle (11) and a bearing surface (5, 6), the said roller comprising an inner ring (21) fastened to the axle (11), an outer ring (23) bearing on the said surface (5, 6) and an intermediate ring (22) interposed between the inner ring (21) and the outer ring (23), the inner (21) and outer (23) rings being metallic, whilst the intermediate ring (22) is a ring made from polymer, the said roller being intended for functioning at ambient temperature or at low temperature, **characterized in that**, at ambient temperature and before the mounting of the said roller (10):
- the intermediate ring (22) has an outside diameter (d3) slightly greater than the inside diameter (d4) of the outer ring (23); and
- the intermediate ring (22) has an inside diameter (d2) slightly greater than the outside diameter (d1) of the inner ring (21).
